# EUROPÄISCHE PATENTANMELDUNG

(11) **EP 4 119 286 A1**
(43) Veröffentlichungstag der Anmeldung: **18.01.2023**
(21) Anmeldenummer: 22184584.5
(22) Anmeldetag: 13.07.2022
(51) Int. Cl.: B23P 15/30, B23B 27/10, B23B 27/16, B22F 7/06, B22F 5/00, B33Y 80/00

(54) **VERFAHREN ZUR HERSTELLUNG VON DREHWERKZEUGEN UND DREHWERKZEUG**

(30) Priorität: 15.07.2021 DE 102021207539
(71) Anmelder: KARL-HEINZ ARNOLD GmbH, 73760 Ostfildern (DE); Metall Kofler GmbH, 6166 Fulpmes (AT)
(72) Erfinder: Meditz, Werner, 72574 Bad Urach (DE); Kofler, Michael, 6165 Telfes im Stubaital (AT)
(74) Vertreter: Patentanwälte Magenbauer & Kollegen Partnerschaft mbB

(57) **Zusammenfassung**

Die Erfindung betrifft ein Verfahren zur Herstellung von Drehwerkzeugen (11) zur spanabhebenden Drehbearbeitung von Werkstücken, wobei die jeweils eine Längsachse (12) aufweisenden Drehwerkzeuge (11) jeweils einen mit wenigstens einem Basiskörper-Kühlmittelkanal (16) ausgestatteten Basiskörper (13) besitzen, der zwei zueinander entgegengesetzt ausgerichtete Stirnflächen (14a, b) aufweist, wobei an einer der Stirnflächen (14a) ein Werkzeugkopf (17) angeordnet ist, der ein mit dem Basiskörper-Kühlmittelkanal (16) verbundenes Werkzeugkopf-Kühlmittelkanalsystem (18) mit wenigstens einem Werkzeugkopf-Kühlmittelkanal (19) und einen mit wenigstens einer Sitzfläche (20a-c) ausgestatteten Schneideinsatz-Sitz (21) zur Aufnahme eines Schneideinsatzes (22) aufweist, läuft das Verfahren mit folgenden Schritten:
- Bereitstellen wenigstens eines mit dem Basiskörper-Kühlmittelkanal (18) ausgestatteten Basiskörper-Rohlings (40),
- Schichtweiser Aufbau des Werkzeugkopfes (17) an der zugeordneten Stirnfläche (14a) des Basiskörper-Rohlings (40) durch additive Fertigung, wobei sowohl das Werkzeugkopf-Kühlmittelkanalsystem (18) in einer mit dem Basiskörper-Kühlmittelkanal (16) kommunizierender Weise als auch der Schneideinsatz-Sitz (21) unmittelbar ausgebildet werden.

## Beschreibung

Die Erfindung betrifft ein Verfahren zur Herstellung von Drehwerkzeugen zur spanabhebenden Bearbeitung von Werkstücken, wobei die jeweils eine Längsachse aufweisenden Drehwerkzeuge jeweils einen mit wenigstens einem Basiskörper-Kühlmittelkanal ausgestatteten Basiskörper besitzen, der zwei zueinander entgegengesetzt ausgerichtete Stirnflächen aufweist, wobei an einer der Stirnflächen ein Werkzeugkopf angeordnet ist, der ein mit dem Basiskörper-Kühlmittelkanal verbundenes Werkzeugkopf-Kühlmittelkanalsystem mit wenigstens einem Werkzeugkopf-Kühlmittelkanal und einen mit wenigstens einer Sitzfläche ausgestatteten Schneideinsatz-Sitz zur Aufnahme eines Schneideinsatzes aufweist.

Derartige Drehwerkzeuge sind bereits seit langem bekannt. Ein Drehwerkzeug dieser Art ist beispielsweise in der EP 2 664 400 A1 beschrieben. Dort ist ein Schneidwerkzeug offenbart, mit einem Schneidkeil zur spanabhebenden Bearbeitung von Werkstücken, mit mindestens einer Schneidkante, die zwischen einer Spanfläche und einer Freifläche gebildet ist, und mit wenigstens einem internen Kühlmittelkanal, über den Kühlmittel zum Schneidkeil transportierbar ist, wobei der interne Kühlmittelkanal derart orientiert ist, dass das aus ihm austretende Kühlmittel auf der Spanfläche in Richtung zur Schneidkante fließt, derart, dass ein bei der spanabhebenden Bearbeitung entstehender Span unterspült wird.

Bei anderen druckschriftlich nicht nachweisbaren Kühlsystemen ist im Bereich des Werkzeugkopfs eine in Richtung Sitz des Schneideinsatzes gerichtete Austrittsöffnung vorgesehen, über die Kühlschmierstoff bzw. Kühlmittel in Richtung der Spanfläche des Schneideinsatzes gesprüht wird. Jedoch ist die damit verbundene Kühlwirkung an der Spanfläche limitiert, da der Kühlmittelstrahl eine relativ große Streuung aufweist.

Bei der spanabhebenden Bearbeitung, insbesondere auch bei der Drehbearbeitung von Werkstücken ist eine effektive Kühlung an der Bearbeitungsstelle unumgänglich.

Die Ausbildung eines verzweigten Kühlmittelkanalsystems im Werkzeugkopf und dazugehörige an optimalen Positionen am Werkzeugkopf positionierte Austrittsöffnungen sind jedoch aufwendig herzustellen.

Aufgabe der Erfindung ist es daher, ein Verfahren zur Herstellung von Drehwerkzeugen zur spanabhebenden Bearbeitung von Werkstücken und ein Drehwerkzeug zu schaffen, mit der die Kühlung der Bearbeitungsstelle zwischen Schneideinsatz und zu bearbeitendem Werkstück optimiert wird.

Diese Aufgabe wird durch ein Verfahren zur Herstellung von Drehwerkzeugen mit den Merkmalen des unabhängigen Anspruchs 1 und mit einem Drehwerkzeug mit den Merkmalen des unabhängigen Anspruchs 12 gelöst. Weiterbildungen der Erfindung sind in den Unteransprüchen dargestellt.

Bei einem Verfahren zur Herstellung von Drehwerkzeugen zur spanabhebenden Drehbearbeitung von Werkstücken, wobei die jeweils eine Längsachse aufweisenden Drehwerkzeuge jeweils einen mit wenigstens einem Basiskörper-Kühlmittelkanal ausgestatteten Basiskörper besitzen, der zwei zueinander entgegengesetzt ausgerichtete Stirnflächen aufweist, wobei an einer der Stirnflächen ein Werkzeugkopf angeordnet ist, der ein mit dem Basiskörper-Kühlmittelkanal verbundenes Werkzeugkopf-Kühlmittelkanalsystem mit wenigstens einem Werkzeugkopf-Kühlmittelkanal und einen mit wenigstens einer Sitzfläche ausgestatteten Schneideinsatz-Sitz zur Aufnahme eines Schneideinsatzes aufweist, läuft das Verfahren nach folgenden Schritten ab:
- Bereitstellen wenigstens eines mit dem Basiskörper-Kühlmittelkanal ausgestatteten Basiskörper-Rohlings,
- Schichtweiser Aufbau des Werkzeugkopfs an der zugeordneten Stirnfläche des Basiskörper-Rohlings durch additive Fertigung, wobei sowohl das Werkzeugkopf-Kühlmittelkanalsystem in einer mit dem Basiskörper-Kühlmittelkanal kommunizierender Weise als auch der Schneideinsatz-Sitz unmittelbar ausgebildet werden.

Durch die additive Fertigung also den schichtweisen Aufbau des Werkzeugkopfes ist also möglich, auch komplizierte, beispielsweise Bögen und Krümmungen aufweisende, verzweigte Kühlmittelkanalsysteme zu schaffen, so dass Kühlmittel bzw. Kühlschmierstoff durch entsprechende Kanalführung nahezu an jeden Bereich des Werkzeugkopfes transportiert werden kann, so dass eine optimale Zuführung von Kühlmittel an die Bearbeitungsstelle möglich ist.

Die additive Fertigung des Werkzeugkopfes erfolgt zweckmäßigerweise mittels Lasersintern. Alternativ wäre es jedoch auch möglich, die additive Fertigung durch Laserstrahlschmelzen oder Elektronenstrahlschmelzen durchzuführen. Zweckmäßigerweise besteht der Werkzeugkopf aus Metall. Insbesondere die vorgenannten Techniken für die additive Fertigung eignen sich für Metalle.

In besonders bevorzugter Weise wird der schichtweise Aufbau des Werkzeugkopfes auf Grundlage elektronisch hinterlegter Konstruktionsdaten durchgeführt. Es ist insbesondere also möglich die Außengeometrie des herzustellenden Werkzeugkopfes, das Werkzeugkopf-Kühlkanalsystem, die Geometrie des Schneideinsatz-Sitzes als elektronische Daten, beispielsweise in Form von CAD-Daten, in einer geeigneten Rechnereinheit zu hinterlegen.

Bei einer Weiterbildung der Erfindung endet der wenigstens eine Werkzeugkopf-Kühlmittelkanal an einer zugeordneten in Richtung Sitzfläche weisenden Austrittsöffnung, die insbesondere als Austrittsdüse ausgebildet ist. Die Austrittsöffnung, insbesondere Austrittsdüse wird beim schichtweisen Aufbau ebenfalls unmittelbar ausgebildet.

Zweckmäßigerweise besitzt das Werkzeugkopf-Kühlmittelkanalsystem mehrere Werkzeugkopf-Kühlmittelkanäle, die jeweils an einer zugeordneten Austrittsöffnung enden.

Bei einer Weiterbildung der Erfindung ist die Austrittsöffnung eines jeweiligen Werkzeugkopf-Kühlmittelkanals an einem bezüglich benachbarter Außenflächenabschnitten der Außenfläche des Werkzeugkopfes erhaben ausgebildeten Höcker angeordnet, der beim schichtweisen Aufbau ebenfalls unmittelbar ausgebildet wird. Dieser Höcker kann beispielsweise ein schmaler Materialstreifen sein, der sich ansonsten ohne additive Fertigung durch herkömmliche Fertigungsmethoden nicht herstellen ließe. Alternativ zu der Anordnung der Austrittsöffnung an einem Höcker ist es beispielsweise auch möglich, dass die Austrittsöffnung in einer Vertiefung angeordnet ist, die zweckmäßigerweise treppenartig von benachbarten Außenflächenabschnitten des Werkzeugkopfes vertieft angeordnet ist.

Bei einer Weiterbildung der Erfindung wird die wenigstens eine Sitzfläche des Schneideinsatz-Sitzes zur Verringerung der Oberflächenrauigkeit nach Fertigstellung des schichtweisen Aufbaus nachbearbeitet, beispielsweise geschliffen. Alternativ wäre es jedoch auch denkbar, die Sitzfläche zu läppen oder zu honen oder zuerst zu schleifen und danach zu läppen und zu honen.

Bei einer Weiterbildung der Erfindung wird beim schichtweisen Aufbau wenigstens eine zylindrische Öffnung für ein Klemmelement eines Klemmsystems zur Festklemmung eines Schneideinsatzes in dessen Gebrauchszustand unmittelbar ausgebildet.

Zweckmäßigerweise handelt es sich beim Schneideinsatz um eine Schneidplatte, die insbesondere als Wendeschneidplatte ausgestaltet ist. Daher könnte in diesem Fall der Schneideinsatz-Sitz auch als Plattensitz bezeichnet werden.

Zweckmäßigerweise weist die Öffnung für das Klemmelement ein Innengewinde auf und das Klemmelement ist als eine mit dem Innengewinde verschraubbare Klemmschraube ausgebildet.

Es ist jedoch auch denkbar, andere Klemmsysteme einzusetzen, beispielsweise solche die ohne eine zylindrische Öffnung für ein Klemmelement auskommen.

Bei einer Weiterbildung der Erfindung werden nach dem schichtweisen Aufbau Komponenten des Klemmsystems ohne den Schneideinsatz vormontiert. Die Auswahl des Schneideinsatzes insbesondere hinsichtlich Geometrie und Material kann dann vom Kunden vorgenommen werden.

Bei einer Weiterbildung der Erfindung weist der Basiskörper einen rechteckigen, insbesondere quadratischen Querschnitt auf. Der Basiskörper-Rohling kann beispielsweise gefräst und geschliffen sein, so dass eine Nachbearbeitung nach dem schichtweisen Aufbau des Werkzeugkopfes am Basiskörper nicht mehr notwendig ist.

Zweckmäßigerweise ist der Basiskörper-Kühlmittelkanal koaxial zu einer Mittelachse des Basiskörpers ausgerichtet.

Die Erfindung umfasst ferner ein Drehwerkzeug zur spanabhebenden Drehbearbeitung von Werkzeugen, das eine Längsachse und einen mit wenigstens einem Basiskörper-Kühlmittelkanal ausgestatteten Basiskörper besitzt, der zwei zueinander entgegengesetzt ausgerichtete Stirnflächen aufweist, wobei an einer der Stirnflächen ein Werkzeugkopf angeordnet ist, der ein mit dem Basiskörper-Kühlmittelkanal verbundenes Werkzeugkopf-Kühlmittelkanalsystem mit wenigstens einem Werkzeugkopf-Kühlmittelkanal und einen mit wenigstens einer Sitzfläche ausgestatteten Schneideinsatz-Sitz zur Aufnahme eines Schneideinsatzes aufweist.

Das erfindungsgemäße Drehwerkzeug zeichnet sich dadurch aus, dass der Werkzeugkopf schichtweise an der zugeordneten Stirnfläche des Basiskörpers durch additive Fertigung aufgebaut ist, wobei sowohl das Werkzeugkopf-Kühlmittelkanalsystem in einer mit dem Basiskörper-Kühlmittelkanal kommunizierenden Weise als auch der Schneideinsatz-Sitz durch den schichtweisen Aufbau unmittelbar ausgebildet sind.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels des erfindungsgemäßen Drehwerkzeugs,
- Figur 2: eine Teilansicht des Drehwerkzeugs von Figur 1 mit einer Explosionsdarstellung des Klemmsystems,
- Figur 3: eine Draufsicht auf das Drehwerkzeug von Figur 1 ohne Schneideinsatz und Klemmsystem jedoch mit dem Basiskörper-Kühlmittelkanal und dem Kühlkanalsystem des Werkzeugkopfes,
- Figur 4: einen Schnitt durch den Werkzeugkopf von Figur 3 entlang der Linie IV-IV,
- Figur 5: einen Schnitt durch den Werkzeugkopf des Drehwerkzeugs von Figur 3 entlang der Linie V-V,
- Figur 6: einen Schnitt durch den Werkzeugkopf des Drehwerkzeugs von Figur 3 entlang der Linie VI-VI,
- Figur 7: eine perspektivische Darstellung mehrerer Basiskörper-Rohlinge bei der Durchführung des erfindungsgemäßen Verfahrens und
- Figur 8: eine Darstellung korrespondierend zu Figur 6, wobei hier die Werkzeugköpfe an den jeweiligen Basiskörper-Rohlingen additiv hergestellt sind.

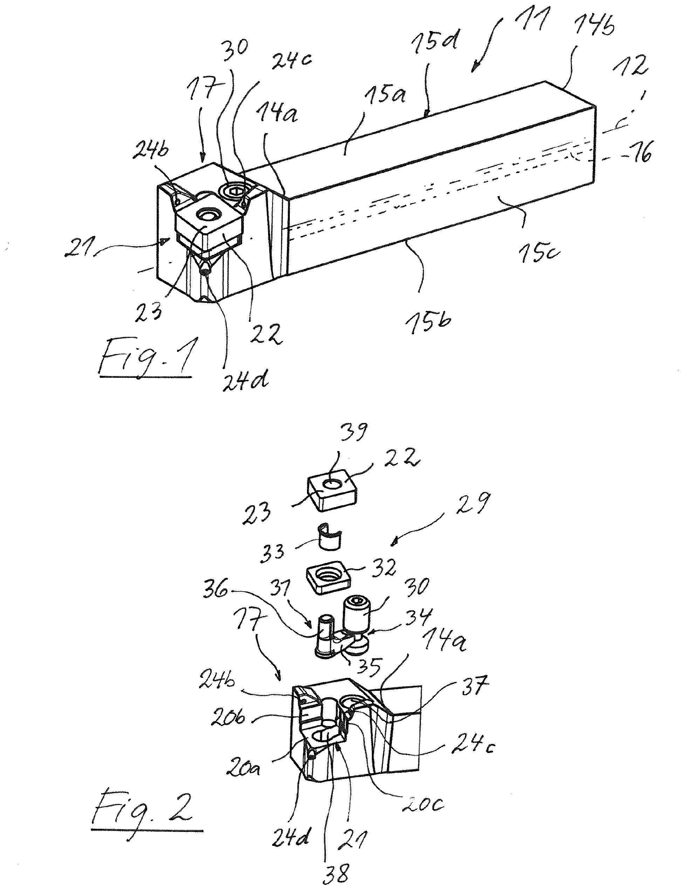

Die Figuren 1 bis 6 zeigen ein bevorzugtes Ausführungsbeispiel des erfindungsgemäßen Drehwerkzeugs 11 zur spanabhebenden Drehbearbeitung von Werkstücken.

Das mit einer Längsachse 12 ausgestattete Drehwerkzeug 11 besitzt einen Basiskörper 13, der im gezeigten Beispielsfall einen rechteckigen, insbesondere quadratischen Querschnitt aufweist.

Der Basiskörper 13 ist dafür vorgesehen, in einen Grundhalter (nicht dargestellt) eingesetzt und dort befestigt zu werden, wobei der Grundhalter seinerseits an einer hierfür vorgesehenen Aufnahme einer Drehmaschine befestigbar ist.

Im gezeigten Beispielsfall besitzt der Basiskörper 13 zwei einander entgegengesetzt zueinander ausgerichtete Stirnflächen 14a, 14b und vier Seitenflächen 15a-d, von denen eine erste Seitenfläche die Oberseite und eine hierzu entgegengesetzte zweite Seitenfläche die Unterseite des Basiskörpers 13 bilden. Die beiden einander entgegengesetzt liegenden restlichen Seitenflächen 15c, d bilden die Seitenwände des Basiskörpers 13.

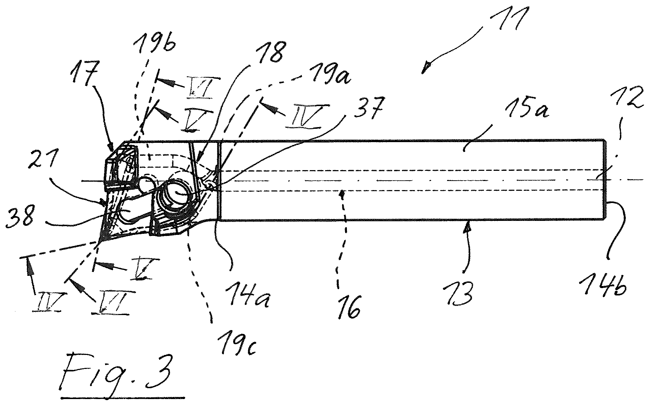

Wie insbesondere in den Figuren 1 und 3 (gestrichelte Linien) gezeigt, besitzt der Basiskörper 13 einen Basiskörper-Kühlmittelkanal 16. Der Basiskörper-Kühlmittelkanal 16 ist zur Zufuhr von aus einer Kühlmittelquelle stammendem Kühlmittel bzw. Kühlschmierstoff vorgesehen. Hierzu besitzt eine der Stirnflächen 14b des Basiskörpers eine Anschlussöffnung (nicht gezeigt) zum Anschluss einer zugeordneten externen Kühlmittelzuleitung. Die Anschlussöffnung an der hinteren Stirnfläche 14b ist jedoch rein beispielhaft, es ist durchaus denkbar, mehrere Anschlussöffnungen vorzusehen oder auch die Anschlussöffnung anders zu positionieren, beispielsweise an einer der Seitenflächen des Basiskörpers 13.

Der Basiskörper 13 besteht zweckmäßigerweise aus Stahlmaterial. Zweckmäßigerweise wird zunächst in nachfolgend noch beschriebener Weise ein Basiskörper-Rohling bereitgestellt, der beispielsweise aus einem Stahlblock herausgefräst und anschließend geschliffen wird.

Eine weitere wesentliche Komponente des Drehwerkzeugs 11 ist ein an der vorderen Stirnfläche 14a des Basiskörpers 13 angeordneter Werkzeugkopf 17. Der Werkzeugkopf 17 ist im gezeigten Beispielsfall würfelartig ausgestaltet und wird durch das nachfolgend noch näher beschriebene erfindungsgemäße Verfahren hergestellt. Der Werkzeugkopf 17 besitzt ein mit dem Basiskörper-Kühlmittelkanal 16 verbundenes Werkzeugkopf-Kühlmittelkanalsystem 18, das wenigstens einen Werkzeugkopf-Kühlmittelkanal 19 umfasst.

Der Werkzeugkopf 17 besitzt ferner einen mit wenigstens einer Sitzfläche 20 ausgestatteten Schneideinsatz-Sitz 21 zur Aufnahme eines Schneideinsatzes 22. Das Werkzeugkopf-Kühlmittelkanalsystem 18 ist so konzipiert, dass Kühlmittel bzw. Kühlschmierstoff optimal an die Bearbeitungsstelle und insbesondere dort an die heißeste Stelle, nämlich der Spanfläche 23 des Schneideinsatzes 22 geleitet wird.

Der wenigstens eine Werkzeugkopf-Kühlmittelkanal 19 endet an einer zugeordneten in Richtung Sitzfläche 20 weisenden Austrittsöffnung 24. Insbesondere ist die Austrittsöffnung 24 als Austrittsdüse derart konzipiert, dass Austreten des Kühlmittels zielgerichtet an die Bearbeitungsstelle gestrahlt bzw. gespritzt wird. Die aus der Austrittsöffnung 24 austretenden kühlmittelstrahlen sind also auf die Bearbeitungsstelle hin ausgerichtet.

Im gezeigten Beispielsfall besteht das Werkzeugkopf-Kühlmittelkanalsystem 18 aus mehreren Werkzeugkopf-Kühlmittelkanälen 19a-d. Wie insbesondere in Figur 3 gezeigt, ist ein mit den Basiskörper-Kühlmittelkanal 16 kommunizierender Werkzeugkopf-Basiskühlmittelkanal 25 vorgesehen, von dem aus drei Werkzeugkopf-Kühlmittelkanäle 19b-d abzweigen.

Wie insbesondere in Figur 1 gezeigt, enden die Werkzeugkopf-Kühlmittelkanäle 19b-d an einer zugeordneten Austrittsöffnung 24b-d.

Wie ferner in Figur 1 gezeigt, sind im gezeigten Beispielsfall die drei Austrittsöffnungen 24 so gruppiert, dass Kühlmittelstrahlen von links oben, rechts oben und zentral unten zur Bearbeitungsfläche hin gerichtet sind. Zweckmäßigerweise spannen die drei Austrittsöffnungen 24b-d ein Dreieck auf, bei dem die Austrittsöffnungen 24b-d jeweils an den Ecken des Dreiecks liegen.

Wie insbesondere in Figur 2 gezeigt, sind zwei der drei Austrittsöffnungen 24b-c oberhalb und eine dritte Austrittsöffnung 24d unterhalb der Sitzfläche 20 angeordnet. Die unterhalb der Sitzfläche 20 angeordnete Austrittsöffnung 24d dient zweckmäßigerweise der Spanunterspülung von durch die Schneidkante des Schneideinsatzes 22 abgeschälten Spänen.

Wie insbesondere in Figur 1 gezeigt, sitzen die beiden oberen Austrittsöffnungen 24b, c an zugeordneten bezüglich benachbarter Außenflächenabschnitten der Außenfläche 26 des Werkzeugkopfes 17 erhaben ausgebildeten Höckern 27a, b. Wie insbesondere die Figuren 3 bis 5 zeigen, erfolgt die Kanalführung der zu den Austrittsöffnungen 24b-d führenden Werkzeugkopf-Kühlmittelkanälen 19b-d auf dem geeignetsten kürzesten Weg zwischen dem Werkzeugkopf-Basiskühlmittelkanal 19a und den zugeordneten Austrittsöffnungen 24b-d. So ist es beispielsweise charakteristisch, dass die Werkzeugkopf-Kühlmittelkanäle 19b-d auch einen bogenförmigen Verlauf, das heißt gekrümmte, bogenförmige Abschnitte aufweisen, die nur mit dem nachfolgend noch näher beschriebenen erfindungsgemäßen Herstellungsverfahren herstellbar sind.

Wie insbesondere in den Figuren 1 und 2 gezeigt, ist der Schneideinsatz 22 beispielhaft in Form einer Schneidplatte, insbesondere Wendeschneidplatte gezeigt. Der Schneideinsatz-Sitz 21 könnte in diesem Fall daher auch als Plattensitz bezeichnet werden.

Im gezeigten Beispielsfall sind drei zusammenwirkende Sitzflächen 20a-c vorgesehen, wobei eine Grund-Sitzfläche 20a für die Auflage der Wendeschneidplatte dient, wobei die Ebene dieser Grund-Sitzfläche 20a im Wesentlichen mit der Ebene der oberen Seitenflächen bzw. Oberseite des Basiskörpers 13 parallel liegt.

Ferner sind zwei Seiten-Sitzflächen 20b, c vorgesehen, die beim nachfolgend beschriebenen Klemmvorgang als Anpressflächen dienen.

Wie insbesondere in Figur 2 gezeigt, dient zur Festklemmung des Schneideinsatzes, insbesondere also der Wendeschneidplatte ein Klemmsystem 29, das im gezeigten Beispielsfall eine Klemmschraube 30, ein mit der Klemmschraube 30 zusammenwirkendes Kniehebelelement 31, eine Unterlegplatte 32 und einen Rohrstift 33 aufweist.

Wie insbesondere in Figur 2 gezeigt, besitzt die Klemmschraube 30 eine umlaufende Ringnut 34, in die ein Kniehebelschenkel 35 des Kniehebelelements 31 eingreifen kann. Das Kniehebelelement 31 besitzt ferner einen mit dem Kniehebelschenkel verbundenen zylindrischen Zentrierabschnitt 36. Die Klemmschraube 30 besitzt ein Außengewinde (nicht dargestellt) das mit einem in einer Öffnung 37 des Werkzeugkopfs ausgebildeten Innengewinde verschraubbar ist. Die Ausrichtung dieser Öffnung 37 ist im Wesentlichen quer zur Längsachse 12 des Drehwerkzeugs 11.

Zum Festklemmen der zu montierenden Wendeschneidplatte wird zunächst das Klemmsystem 29 vormontiert. Die Klemmschraube 30 wird in die zugehörige Öffnung 37 eingeschraubt. Danach kann das Kniehebelelement 31 über eine Montageöffnung 38 in den Werkzeugkopf 17 eingeführt und der Kniehebelschenkel 35 in die Ringnut 34 eingefädelt werden. Die Unterlegplatte 32 und der Rohrstift 33 werden am zylindrischen Zentrierabschnitt 36 montiert. Danach wird die gewünschte Wendeschneidplatte, die eine zentrale Montageöffnung 39 aufweist auf den Rohrstift 33, der seinerseits auf dem zylindrischen Zentrierabschnitt 36 sitzt aufgesteckt. Anschließend kann durch Verschrauben der Klemmschraube 30 eine Relativbewegung zwischen dem Kniehebelelement 31 und der Klemmschraube 30 bewirkt werden in der Art, dass der Kniehebelschenkel mit der Klemmschraube 30 nach unten gedrückt wird, während dies ein Verschwenken des Kniehebelelements 31 bewirkt, so dass der zylindrische Zentrierabschnitt nach innen auf die Klemmschraube zu schwenkt, wodurch die Wendeschneidplatte an die seitlichen Sitzflächen 20b, c geklemmt wird.

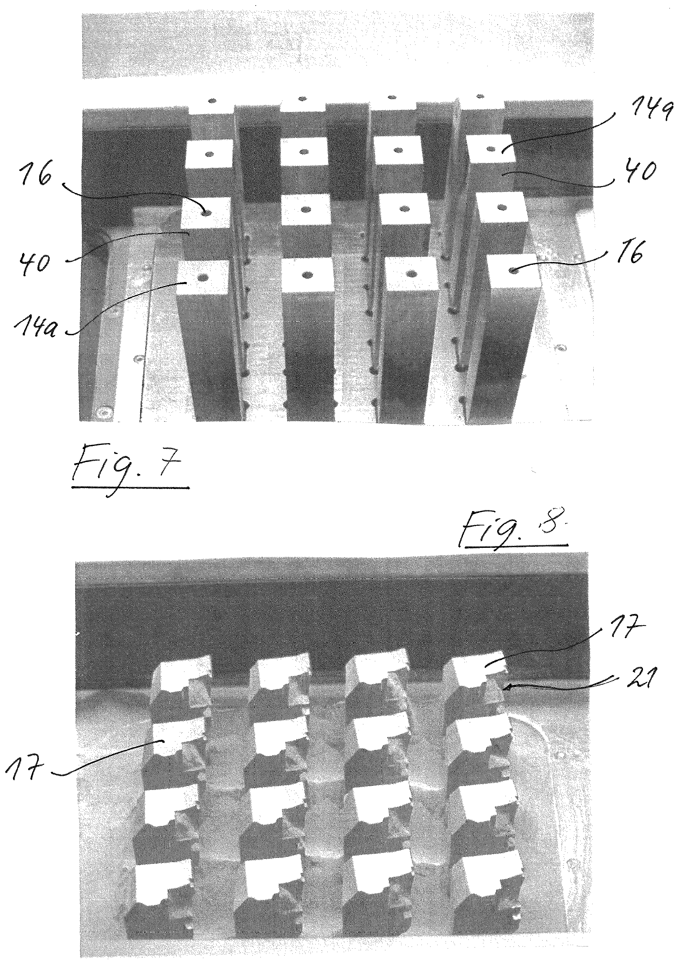

Das erfindungsgemäße Drehwerkzeug 11 wird gemäß dem erfindungsgemäßen Verfahren wir folgt hergestellt:
Wie insbesondere in Figur 7 gezeigt, wird zunächst wenigstens ein mit dem Basiskörper-Kühlmittelkanal 16 ausgestatteter Basiskörper-Rohling 40 bereitgestellt. Im Beispielsfall wird gleichzeitig eine Vielzahl von Basiskörper-Rohlingen 40 bereitgestellt.

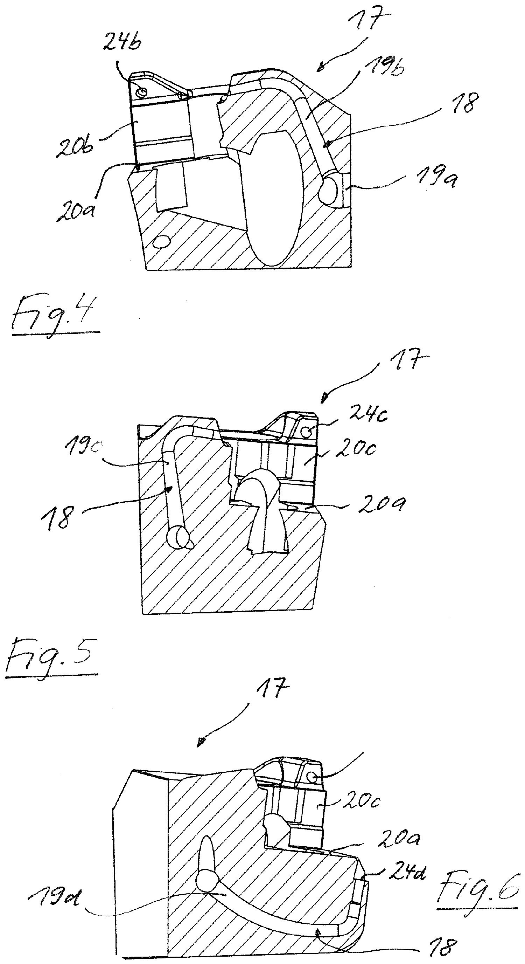

Wie in Figur 6 zu erkennen, ragen die Stirnflächen 14a, an denen in nachfolgend beschriebener Weise der Werkzeugkopf 17 aufgebaut wird nach oben. Die Basiskörper-Rohlinge 40 besitzen bereits, wie erwähnt, jeweils einen Basiskörper-Kühlmittelkanal, die im gezeigten Beispielsfall koaxial zur Achse des Basiskörpers 13 ausgerichtet sind.

Nach der Bereitstellung der Basiskörper-Rohlinge 40 werden die Werkzeugköpfe jeweils an der zugeordneten Stirnfläche des zugeordneten Basiskörper-Rohlings 40 durch additive Fertigung aufgebaut.

Die additive Fertigung wird zweckmäßigerweise mittels Lasersintern durchgeführt.

Der schichtweise Aufbau der Werkzeugköpfe 17 wird auf Grundlage elektronisch hinterlegte Konstruktionsdaten ausgeführt. Diese Konstruktionsdaten können beispielsweise in einer Rechnereinheit abgespeichert sein. Der additive Fertigungsprozess kann beispielsweise mittels einer SLS-Maschine (Selektives Lasersintern) durchgeführt werden. Beim schichtweisen Aufbau eines jeweiligen Werkzeugkopfes 17 wird sowohl das Werkzeugkopf-Kühlmittelkanalsystem 18 in einer mit dem Basiskörper-Kühlmittelkanal 16 kommunizierenden Weise als auch der Schneideinsatz-Sitz 21 unmittelbar ausgebildet.

Hierbei sind insbesondere die in den Figuren 4 bis 6 beispielhaft gezeigten Verläufe der Werkzeugkopf-Kühlmittelkanäle 19b-c erzeugbar. Beim schichtweisen Aufbau des Werkzeugkopfes werden zudem auch bereits die Austrittsöffnungen 24b-d, die im Beispielsfall gezeigten Höcker 27a, b und die zylindrische Öffnung für die Klemmschraube unmittelbar mit ausgebildet.

Nach dem schichtweisen Aufbau des Werkzeugkopfes werden dann die Sitzflächen 20a-c des Schneideinsatz-Sitzes nachbearbeitet, beispielsweise geschliffen, poliert, geläppt oder gehont. Schließlich ist es auch denkbar, wenngleich nicht zwingend vorgegeben, ein geeignetes Klemmsystem, beispielsweise das in der Figur 2 gezeigte am Werkzeugkopf vorzumontieren.

## Patentansprüche

1. Verfahren zur Herstellung von Drehwerkzeugen (11) zur spanabhebenden Drehbearbeitung von Werkstücken, wobei die jeweils eine Längsachse (12) aufweisenden Drehwerkzeuge (11) jeweils einen mit wenigstens einem Basiskörper-Kühlmittelkanal (16) ausgestatteten Basiskörper (13) besitzen, der zwei zueinander entgegengesetzt ausgerichtete Stirnflächen (14a, b) aufweist, wobei an einer der Stirnflächen (14a) ein Werkzeugkopf (17) angeordnet ist, der ein mit dem Basiskörper-Kühlmittelkanal (16) verbundenes Werkzeugkopf-Kühlmittelkanalsystem (18) mit wenigstens einem Werkzeugkopf-Kühlmittelkanal (19) und einen mit wenigstens einer Sitzfläche (20a-c) ausgestatteten Schneideinsatz-Sitz (21) zur Aufnahme eines Schneideinsatzes (22) aufweist, das Verfahren mit folgenden Schritten:
- Bereitstellen wenigstens eines mit dem Basiskörper-Kühlmittelkanal (18) ausgestatteten Basiskörper-Rohlings (40),
- Schichtweiser Aufbau des Werkzeugkopfes (17) an der zugeordneten Stirnfläche (14a) des Basiskörper-Rohlings (40) durch additive Fertigung, wobei sowohl das Werkzeugkopf-Kühlmittelkanalsystem (18) in einer mit dem Basiskörper-Kühlmittelkanal (16) kommunizierenden Weise als auch der Schneideinsatz-Sitz (21) unmittelbar ausgebildet werden.

2. Verfahren nach Anspruch 1, **dadurch gekennzeichnet, dass** der schichtweise Aufbau des Werkzeugkopfes (17) auf Grundlage elektronisch hinterlegter Konstruktionsdaten erfolgt.

3. Drehwerkzeug nach Anspruch 1 oder 2, **dadurch gekennzeichnet, dass** der wenigstens eine Werkzeugkopf-Kühlmittelkanal (19) an einer zugeordneten in Richtung Sitzfläche (20a-c) weisende Austrittsöffnung (24), insbesondere Austrittsdüse, endet, die beim schichtweisen Aufbau ebenfalls unmittelbar ausgebildet wird.

4. Verfahren nach einem der vorhergehenden Ansprüche, **dadurch gekennzeichnet, dass** das Werkzeugkopf-Kühlmittelkanalsystem (18) mehrere Werkzeugkopf-Kühlmittelkanäle (19b-d) aufweisen, die jeweils an einer zugeordneten Austrittsöffnung (24b-d) enden.

5. Verfahren nach Anspruch 4, **dadurch gekennzeichnet, dass** die Austrittsöffnung (24b-d) eines jeweiligen Werkzeugkopf-Kühlmittelkanals (19b-d) an einem bezüglich benachbarter Außenflächenabschnitten der Außenfläche (26) des Werkzeugkopfes (17) erhaben ausgebildeten Höcker (27a, b) angeordnet ist, der beim schichtweisen Aufbau ebenfalls unmittelbar ausgebildet wird.

6. Verfahren nach einem der vorhergehenden Ansprüche, **dadurch gekennzeichnet, dass** die wenigstens eine Sitzfläche (20a-c) zur Verringerung der Oberflächenrauigkeit nach Fertigstellung des schichtweisen Aufbaus nachbearbeitet, beispielsweise geschliffen, wird.

7. Verfahren nach einem der vorhergehenden Ansprüche, **dadurch gekennzeichnet, dass** beim schichtweisen Aufbau wenigstens eine zylindrische Öffnung (37) für ein Klemmelement eines Klemmsystems (29) zur Festklemmung des Schneideinsatzes (22) in dessen Gebrauchszustand unmittelbar ausgebildet wird.

8. Verfahren nach Anspruch 7, **dadurch gekennzeichnet, dass** die Öffnung ein Innengewinde aufweist und das Klemmelement als eine mit dem Innengewinde verschraubbare Klemmschraube (30) ausgebildet ist.

9. Verfahren nach einem der Ansprüche 7 oder 8, **dadurch gekennzeichnet, dass** nach dem schichtweisen Aufbau Komponenten des Klemmsystems (29) ohne den Schneideinsatz (22) vormontiert werden.

10. Verfahren nach einem der vorhergehenden Ansprüche, **dadurch gekennzeichnet, dass** der Basiskörper (13) einen rechteckigen, insbesondere quadratischen Querschnitt aufweist.

11. Verfahren nach einem der vorhergehenden Ansprüche, **dadurch gekennzeichnet, dass** der Basiskörper-Kühlmittelkanal (16) koaxial zu einer Mittelachse des Basiskörpers (13) ausgerichtet ist.

12. Verfahren nach einem der vorhergehenden Ansprüche, **dadurch gekennzeichnet, dass** die additive Fertigung mittels Lasersintern, Laserstrahlschmelzen oder Elektronenstrahlschmelzen durchgeführt wird.

13. Drehwerkzeug zur spanabhebenden Drehbearbeitung von Werkstücken, das eine Längsachse (12) und einen mit wenigstens einem Basiskörper-Kühlmittelkanal (16) ausgestatteten Basiskörper (13) besitzt, der zwei zueinander entgegengesetzt ausgerichtete Stirnflächen (14a, b) aufweist, wobei an einer der Stirnflächen (14a, b) ein Werkzeugkopf (17) angeordnet ist, der ein mit dem Basiskörper-Kühlmittelkanal (16) verbundenes Werkzeugkopf-Kühlmittelkanalsystem (18) mit wenigstens einem Werkzeugkopf-Kühlmittelkanal (19a-d) und einen mit wenigstens einer Sitzfläche (20a-c) ausgestatteten Schneideinsatz-Sitz (21) zur Aufnahme eines Schneideinsatzes (22) aufweist, **dadurch gekennzeichnet, dass** der Werkzeugkopf (17) schichtweise an der zugeordneten Stirnfläche (14a) des Basiskörpers (13) durch additive Fertigung aufgebaut ist, wobei sowohl das Werkzeugkopf-Kühlmittelkanalsystem (18) in einer mit dem Basiskörper-Kühlmittelkanal (16) kommunizierender Weise als auch der Schneideinsatz-Sitz (21) durch den schichtweisen Aufbau unmittelbar ausgebildet sind.
